# EUROPEAN PATENT SPECIFICATION

(11) **EP 1 570 360 B1**
(45) Date of publication and mention of the grant of the patent: **09.02.2011**
(21) Application number: 02791783.0
(22) Date of filing: 06.12.2002
(51) Int. Cl.: G06F 13/28

(54) **A METHOD FOR DIRECT MEMORY ACCESS, RELATED SYSTEM AND COMPUTER PROGRAM PRODUCT**
DMA-VERFAHREN, ENTSPRECHENDE SYSTEM UND RECHNERPROGRAMMPRODUKT
PROCÉDÉ POUR ACCÈS DIRECT EN MÉMOIRE, SYSTÈME ASSOCIÉ ET PRODUIT PROGRAMME INFORMATIQUE

(43) Date of publication of application: 07.09.2005
(73) Proprietor: Telecom Italia S.p.A., 20123 Milano (IT)
(72) Inventor: BRAGAGNINI, Andrea, I-10148 Torino (IT); VARRIALE, Antonio, I-10148 Torino (IT)
(74) Representative: Battipede, Francesco
(86) International application number: PCT/EP2002/013847
(87) International publication number: WO 2004/053708

(56) References cited:
- EP-A- 0 933 926
- EP-A- 1 231 540
- US-B1- 6 182 165

## Description

The present invention relates to techniques for direct memory access (DMA).

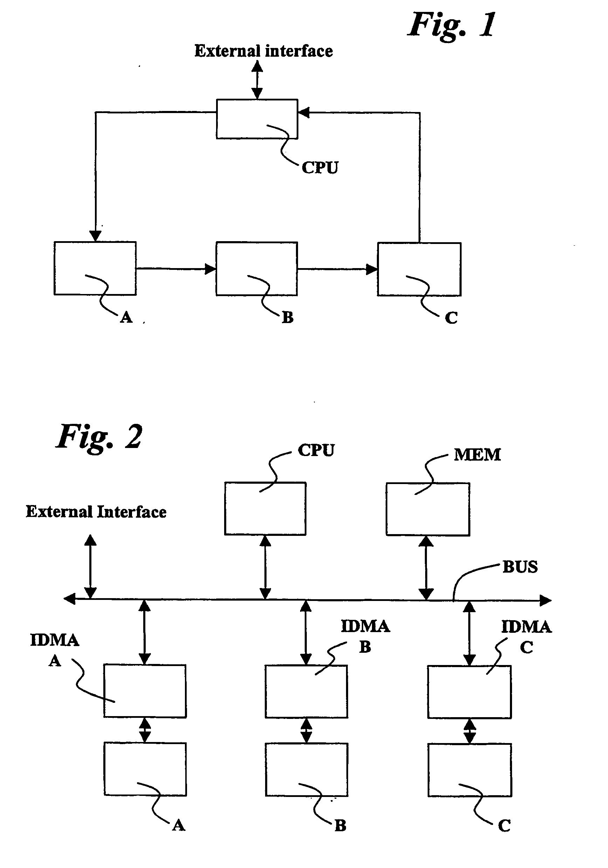

As depicted in Figure 1, a typical System On Chip arrangement for direct memory access requires a CPU to communicate with a number of blocks (intellectual properties or IPs) generically called A, B, C, which can be connected together. In such a prior art arrangement data transfer from A to B and from B to C is scheduled by the CPU that monitors the state of the ongoing processes on the basis of interrupts from the blocks.

A wide variety of possible variants of such a basic arrangement are known in the art.

For instance, in US-A-4 481 578 a DMA arrangement is disclosed including a DMA controller connected to each of a plurality of processors to facilitate transfer of bulk data from one memory to the other without the intervention of either or both processors.

In US-A-5 212 795 a programmable DMA controller arrangement is disclosed for regulating access of each of a number of I/O devices to a bus. The arrangement includes a priority register storing priorities of bus access from the I/O devices, an interrupt register storing bus access requests of the I/O devices, a resolver for selecting one of the I/O devices to have access to the bus, a pointer register storing addresses of locations in a memory for communication with the one I/O device via the bus, a sequence register storing an address of a location in the memory containing a channel program instruction which is to be executed next, an ALU for incrementing or decrementing addresses stored in the pointer register, computing the next address to be stored in the sequence register, and computing, an initial contents of the registers.

In US-A-5 634 099 another DMA arrangement (designated a Direct Access Memory Unit or DAU) is disclosed wherein the CPU requests a DMA by writing information relevant to the DMA to a remote processor's memory. The CPU can abort a pending DMA request during DAU operations by setting a skip bit in a control block, while an interrupt can also be sent to the CPU wherein the CPU is advised that a DMA request has been completed.

In US-B-6 341 328 multiple co-pendent DMA controllers are provided to read and write common data blocks to two peripheral devices. As a result, only one read and one write command are required for the data to be written to two peripheral devices.

In US-A-2002/0038393 a distributed DMA arrangement is disclosed for use within a system on a chip (SoC). The DMA controller units are distributed to various functions modules desiring direct memory access. The function modules interface to a system bus over which the direct memory access occurs. A global buffer memory is coupled to the system bus and bus arbitrators are used to arbitrate which function modules have access to the system bus to perform the direct memory access. Once a functional module is selected by the bus arbitrator to have access to the system bus, it can establish a DMA routine with the global buffer memory.

The object of the present invention is thus to provide an improved DMA arrangement overcoming the intrinsic disadvantages of the prior art arrangements considered in the foregoing.

One aspect of the present invention is a method as defined in independent claim 1. Another aspect of the invention is a system as defined in independent claim 5. Further embodiments of the invention are specified in the respective appended dependent claims.

A preferred application of the invention is in exchanging data within a direct memory access (DMA) arrangement including a plurality of IP blocks. An embodiment of the invention- provides for associating to the IP blocks respective DMA modules, each including an input buffer and an output buffer. These DMA modules are coupled over a data transfer facility in a chain arrangement wherein each DMA module, other than the last in the chain, has at least one of its output buffer coupled to the input buffer of another DMA modules downstream in the chain and each DMA modules, other than the first in the chain, has its input buffer coupled to the output buffer of another DMA modules upstream in the chain. Each DMA module is caused to interact with the respective IP block by writing data from the input buffer of the DMA module into the respective IP block and reading data from the respective IP block into the output buffer of the DMA module. The input and output buffers of the DMA modules are operated in such a way that:
- writing of data from the input buffer of the DMA module into the respective IP block is started when the input buffer is at least partly filled with data;
- when reading of data from the respective IP block into the output buffer of the DMA module is completed, the data in the output buffer of the DMA module are transferred to the input buffer of the DMA module downstream in the chain or, in the case of the last DMA module in the chain, are provided as output data.

A particularly preferred embodiment of the invention provides for associating to the output buffers and input buffers coupled in the chain at least one intermediate block to control data transfer between the buffers coupled to each other. Transfer of data between the coupled buffers over the data transfer facility is then controlled by issuing at least one request of a requesting buffer for a buffer coupled therewith to indicate at least one transfer condition out of i) data existing to be transferred and ii) enough space existing for receiving said data when transferred. At least one corresponding acknowledgement is then issued towards the requesting buffer confirming, that the at least one transfer condition is met and data are transferred between the requesting buffer and the buffer coupled therewith. The data transfer facility (BUS) between the two coupled buffers is thus left free between the request and the acknowledgement.

A CPU may included in the arrangement considered for transferring data to be processed into the input buffer of the first DMA module in the chain, and collecting the output data from the output buffer of the last DMA module in the chain. The CPU may also be used for configuring the DMA modules.

The invention also includes a system for implementing the method referred to in the foregoing as well as a computer program product directly loadable into the memory of a digital computer and including software code portions for carrying out the method of the invention when the product is run on a computer.

A preferred embodiment of the invention (that can be referred to as "intelligent" direct memory access or IDMA) has been developed to provide a reusable wrapper with DMA capabilities for hardware IP blocks. The aim is to realize e.g. a System On Chip prototyping system structured as a bus system where all the IPs are accessible through the system bus. An embodiment of the IDMA architecture presented herein can also be used as the final solution in integrated Systems On Chip.

A significant feature of the preferred embodiment of the IDMA described herein is the organization of DMA operations on the bus. This improves overall performance of a SoC where several IDMA+IP blocks are used.

An embodiment of the invention will now be described by way of example only, by referring to the annexed views, in which:
- Figure 1, has been already described in the foregoing;
- Figure 2 is a block diagram illustrating a System on Chip architecture for intelligent DMA (IDMA);
- Figure 3 shows a -typical example of System, on Chip design flow;
- Figure 4 is a block diagram of an embodiment of IDMA module architecture;
- Figures 5 and 6 are further detailed block diagrams of parts of the embodiment of Figure 4;
- Figure 7 is a flow chart illustrating certain instruction flows within an embodiment of the invention;
- Figure 8 and 9 are additional detailed block diagrams of other parts of the embodiment of Figure 4;
- Figure 10 shows a possible corresponding memory organisation; and
- Figure 11 shows a specific embodiment of the system of Figure 2.

The exemplary architecture shown in Figure 2 is a bus-based system including a bus (BUS) as a basic data transfer facility. The architecture also includes a CPU, a memory block MEM plus a plurality of IP's designated A, B, C. These IPs are accessible through the system bus via respective "intelligent" DMA modules (IDMAs) designated IDMA A, IDMA B, and IDMA C, respectively.

Each IDMA module (hereinafter, briefly, IDMA) can be described as a respective version of a single VHDL core suitable to be easily adapted to different IPs by modifying a given set of parameters. This is a point that makes IDMA a suitable solution for fast prototyping.

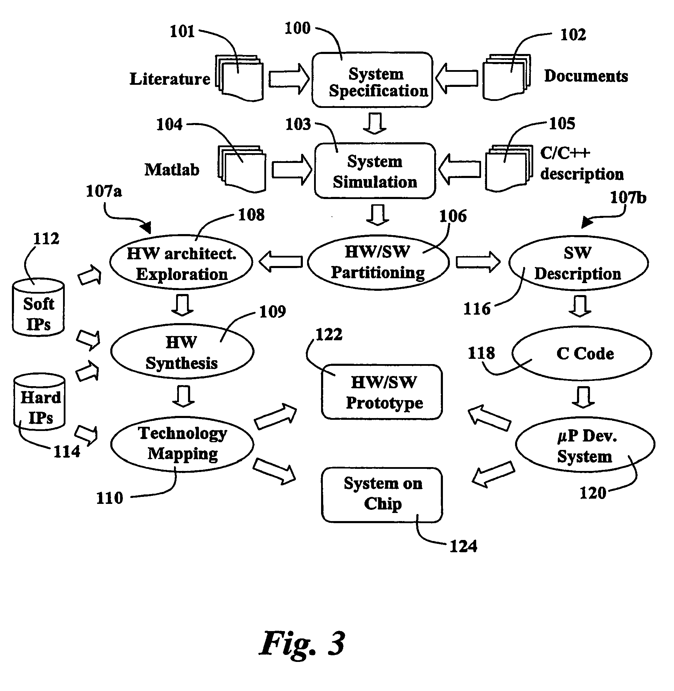

To understand the role of the IDMA in SoC design one may refer to Figure 3 that represents the typical design flow of a SoC .

Starting from system specification 100 based on literature 101 and documents 102, an early system simulation step 103 is realized in a bit true style e.g. based on a Matlab 104 or C/C++ description 105 to obtain results as close as possible to the final implementation.

After this step, a partition 106 must be effected in order to identify those modules 107a that will be realized with customised hardware parts (generally third party IPs) and those modules 107b that will be implemented as a software routine by an embedded processor.

Generating the hardware modules 107a requires steps such as hardware architecture exploration 108, followed by hardware synthesis 109 and technology mapping 110, the steps 108 to 110 being carried out with IPs both of the "soft" type 112 and the "hard" type 114.

Similarly, generating the software modules 107b requires software description 116, C code translation 118 and a microprocessor development system 120.

The partition 106 must be verified and tested on a HW/SW prototyping step, designated 122 before proceeding, in step 124 to SoC realisation proper.

Many partitions might be prototyped before defining the best one. This may require a very long time if the prototype is not fast.

In fact one of the critical issues of prototyping (and developing) SoC is interfacing HW and SW parts through a system bus in a general arrangement as shown in Figure 1. Generally, IPs such as IPs 112 and 114 have very simple interfaces that must be adapted to the bus. This affects the timing and the logical meanings of the signals. Also, the schedule of the IP must be controlled and this implies a complex activity on the System On Chip controller.

If the scheduling of different blocks is not properly organized, the bus may be congested. Consequently, "interfacing" a new IP to the system bus may require a very long time in terms of new design and interfaces development.

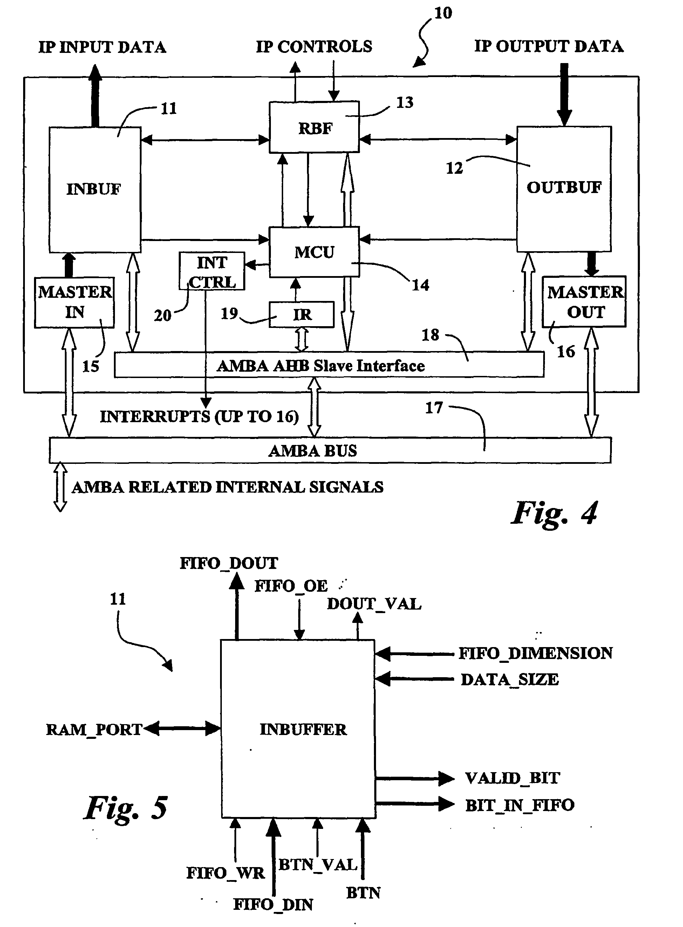

The IDMA architecture generally indicated 10 in Figure 4 is particularly adapted for overcoming the drawbacks that are inherent in prior art arrangements. To that effect, it includes input and output buffers 11 and 12 to generate the input data to the respective IP (not shown) and receive therefrom corresponding IP output data, respectively.

The buffers 11 and 12 cooperate with a reprogrammable FSM (Finite State Machine) such as a RAM based FSM (briefly RBF) 13 of a known type that manages the IP controls. The RBF 13 is activated and controlled by a MCU (Main Control Unit) 14.

References 15 and 16 designate two master blocks, designated "master-in" and "master-out" blocks, respectively. The master blocks 15 and 16 permit data communication from a system bus 17 - preferably patterned after advanced microcontroller bus architecture (AMBA) - to the input buffer 11 and from the buffer 12 to the bus 17. Reference 18 designates an AMBA AHB (Advanced High-performance Bus) slave interface.

Reference 19 designates an internal register (Instruction Register or IR) interposed between the MCU 14 and the slave interface 18.

Finally, reference 20 designates an interrupt controller (INT CTRL) activated by the MCU 14 to generate interrupts (up to 16, in the embodiment shown)

The IDMA 10 has a very flexible IP interface that can be easily adapted to different IPs. This reduces the time needed to connect a new IP.

The IDMA 10 can be configured according to the IP requirements. This feature eliminates the time needed to build a custom logic to drive a new IP.

The IDMA 10 has different master and slave bus interfaces. This feature eliminates the time required to build a particular slave or master interface. Thanks to these features the IDMA reduces the time required to set up a new prototype.

The IDMA architecture 10 is very simple and flexible, which makes it particularly suitable to be expanded to accommodate, e.g. new bus and IP interfaces.

The core description is technology independent; it can be used on different prototyping systems and also on the final implementation. In the presently preferred embodiment, the core was developed in VHDL but it can be exported in a VERILOG project.

The description will now refer to a situation encountered by a designer implementing a design flow as shown in Figure 3. When wishing to define a new partitioning with new IPs, in order to connect to the bus through the IDMA 10, the designer will just need to perform a few operations.

As a first step, a VHDL wrapper will have to be created in order to connect the IP and the IDMA 10.

To that effect, a suitable set of parameters (e.g. a set of twenty integer values) is chosen according to the application requirements. Preferably, creation of the VHDL wrapper and insertion of the application parameters are performed with the support of suitable software tool.

The IDMA/IP core is then included in the design, while programming the IDMA run time and running the prototyping emulation.

In the embodiment shown, a virtual channel is created between those blocks that must be directly connected together. The blocks may then activate data transfer between them only when necessary and without any CPU usage. This feature makes the DMA shown herein an "intelligent" one.

The virtual channel is realized by resorting to the two buffers 11 and 12 (for the data input to the IP and the data output from the IP, respectively) that allow a logical separation between the IP and the bus.

The DMA characteristics are obtained by means of the master block(s) 15 and 16 associated with the input buffer 11 and/or the output buffer 12.

This feature leads to the core becoming able to access the bus directly; the input and output buffers 11 and 12 are intended to store data to and from the IP and to optimise access to the bus.

Also, it will be appreciated that providing two separate master blocks (masterin 15, masterout 16) within the architecture of figure 1 may represent a preferred choice in terms of flexibility. However just one block is usually activated in each IDMA.

In the following, the various blocks comprising the architecture 10 will be detailed.

Architecture 10 is generally intended to co-operate with. "internal" registers not explicitly shown in Figure 4. Each of these registers is implemented in a particular module according to its function and is accessed through the system bus. There are e.g. 33 registers whose width varies between 32 and 1 bit. Nevertheless they are mapped in the memory plan on 32 bit word aligned addresses. Write and read access availability may change according to different implementations for each register.

The general input-output layout of the input buffer (inbuffer) 11 is shown in Figure 5.

Preferably, this block is realized as a FIFO memory. Input data come from the system bus 17 and output data are sent to the IP input interface. When data are stored in the inbuffer the IDMA 10 can download them to the IP while the system bus is free. Writing and reading operations can take place simultaneously, thus allowing data to be downloaded to the IP while the bus 17 is filling the buffer.

A preferred feature of this block is that the input data are 32 bit wide while the width of the output to the IP can be programmed run time by the user. This implies a significant optimisation of the bus activities. For instance, if an IP requires 64 bits to start processing and has a 1 bit wide port the user can download all the data with 2 bus cycles in the input buffer 11. Then the IDMA 10 sends one data item per clock cycle to the IP while the system bus can be used for other purposes.

The input buffer 11 is always accessed through the same bus address (it is a FIFO memory and has always the same entry point). In this case, the FIFO_WR signal is driven high while the data is caused to strobe on the FIFO_DIN port. Before storing the data, the total amount of bits to be loaded must be communicated to the inbuffer driving high the BTN_VAL signal and driving the corresponding value on the BTN port. This allows the input buffer 11 to organize the data when the total amount is not a multiple of 32 bits. The writing operation can be driven by the masterin module 15 or by external components through the slave interface module 18. In the memory organization, the BTN port is handled as an internal register.

When reading the data the FIFO_OE signal must be driven high. The data are available through the FIFO_DOUT port when the DOUT_VAL signal is driven high. FIFO_DOUT is connected directly to the IP. The RBF 13 controls FIFO_OE and DOUT_VAL.

FIFO_DIMENSION port and DATA_SIZE can be used to configure the input buffer 11. DATA_SIZE indicates how many bits must be read at the same time. FIFO_DIMENSION is used to configure the size of the buffer in terms of 32-bit words. The value driven on FIFO_DIMENSION cannot exceed the physical size of the inbuffer. These values can be configured by external components through the SLAVE_INTERFACE port. FIFO_DIMENSION and DATA_SIZE correspond to internal registers.

The VALID_BIT (VBI) and BIT_IN_FIFO ports provide information regarding the internal status of the buffer. In particular VALID_BIT indicates how many bits are available for reading and BIT_IN_FIFO indicates how many bits are physically present in the inbuffer 11.

These values are not always identical because of the internal organization of the data. These values can be read by the other modules in the IDMA 10 and also by an external component through the slave interface module 18. This feature allows external modules to obtain information as to the buffer status and decide whether or not download data to the buffer. VALID_BIT and BIT_IN_FIFO correspond to internal registers.

The entire contents of the input buffer 11 can be read and written through a RAM port without changing the internal status of the FIFO pointers. This feature allows debug operation on the buffer. The RAM port is accessible through the slave interface module 18.

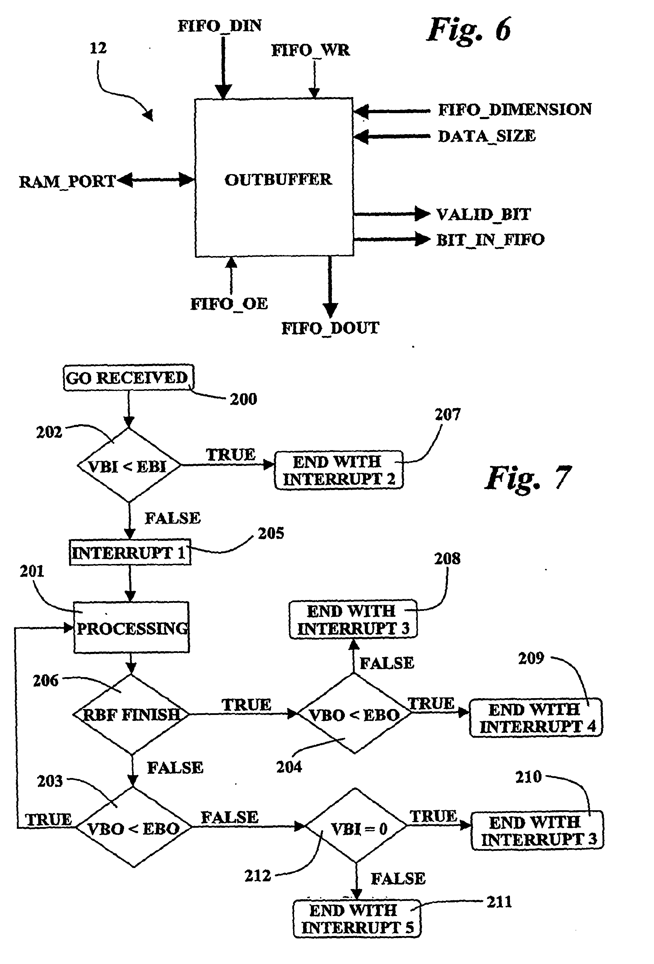

The general input-output layout of the output buffer (outbuffer) 12 is shown in Figure 6.

This block is again realized as a FIFO memory. Input data come from the IP and output data are sent to other modules through the system bus 17. When data are driven out from the IP the IDMA 10 can write them in the output buffer 12 while the bus is free. Writing and reading operations can occur at the same time allowing data to be downloaded from the IP while the bus 17 is reading the buffer 12.

An advantageous feature of this block is that the input data width can be programmed run time by the user while the output data width is e.g. 32. This implies a significant optimisation of the bus activities. For instance, if an IP provides a 2-bit wide output, it will require 32 clock cycles to provide 64 bits that can be read through the bus in 2 clock cycles.

When writing data the FIFO_WR signal must be driven high while data are driven on the FIFO_DIN port. FIFO_DIN is connected directly to the IP. The RBF 13 controls FIFO_WR.

The output buffer 12 is read through the same bus address (it is a FIFO memory and has always the same output point). In this case the FIFO_OE signal is driven high and data are strobed on the next clock cycle. In the embodiment shown, the output buffer read operation is always 32 bits wide. The reading operation can be driven by the masterout module 16 or by external components through the slave interface 18.

FIFO_DIMENSION port and DATA_SIZE can be used to configure the output buffer 12. DATA_SIZE indicates how many bits must be read at the same time. FIFO_DIMENSION is used to configure the size of the buffer in terms of 32-bit words. The value driven on FIFO DIMENSION does not exceed the physical dimension of the output buffer 12. These values can be configured by external components through the SLAVE_INTERFACE port. FIFO_DIMENSION and DATA_SIZE correspond to internal registers.

The VALID_BIT (VBO) and BIT_IN_FIFO ports provide information regarding the internal status of the buffer. Specifically, VALID_BIT indicates how many bits are available for reading and BIT_IN_FIFO indicates how many bits are physically present in the output buffer 12. These values are not always the same because of the internal organization of the data. These values can be read by the other modules in the IDMA 10 as well as by an external component through the slave interface module 18. Again, this feature allows the external modules to know the buffer status and decide whether or not download data to the buffer. VALID_BIT and BIT_IN_FIFO correspond to internal registers.

The entire contents of the output buffer 12 can be read and written through a RAM port without changing the internal status of the FIFO pointers. This feature allows debug operation on the buffer. The RAM port is accessible through the slave interface module 18.

The module 13 is a finite state machine (FSM) that drives operation on the IP.

Its main role is to take data from the input buffer 11, download them in the IP, receive output data from the IP and store them in the output buffer 12.

As these operations can vary run time, especially in prototyping systems, this FSM must be programmable run time. For this reason it is preferably realized (in a manner known per se) with RAM memories that can be written through the system bus. Each RAM address contains a description of one finite state, with all the possible state transitions and the output values. The RBF 13 is activated and controlled by the MCU 14. When the RBF 13 flow finishes (if a finish state is defined) the RBF 13 can drive high the RBF_FINISH to the MCU 14. Any - implementation of a reprogrammable FSM can be used.

In the embodiment shown, the AMBA/AHB slave interface 18 is a standard AMBA slave interface that permits access to the internal registers, the RBF 13 and the buffers 11 and 12. It provides some control on the address values to verify and give error responses if necessary. In the presently preferred embodiment, the whole IDMA addressing space is 64 Mbytes. The base address (IDMA Base Address or IBA) can be changed run time or can be fixed.

The MCU 14 controls the overall functionality of the IDMA 10. It generates commands towards all the other blocks and provides external information to the system using interrupts via the module 20. Preferably, the MCU 14 is realized as a FSM that executes instructions.

The instructions are loaded by the user in the internal register 19 called instruction register or IR.

The core instruction is the GO instruction whose flow is depicted in Figure 7. The main purpose of the GO instruction is to activate the flow of the RBF 13.

Normally the RBF flow enables data transfer from the input buffer 11 to the IP and from the IP to the output buffer 12. When executing a GO instruction (starting from a GO RECEIVED 200) the MCU 14 checks the status of buffers 11 and 12 (VBI and VBO), before and after data processing 201. In the comparison steps 202 and 203-204 that follow the start step 200 and the processing step 201, the VBI (Valid Bit Inbuffer) and VBO (Valid Bit Outbuffer) contents are compared with 'expected' values. These values are stored as EBI (Expected Bit Inbuffer) and EBO (Expected Bit Outbuffer) values.

In particular the RBF flow is enabled, thus leading to the processing step 201 via a first interrupt 205 only if VBI (Valid Bit Inbuffer), is equal or greater than EBI.

After the processing step 201, in a step 206 the MCU 14 also checks the REF_FINISH signal to ascertain whether the RBF has finished its flow. Feedback is given to the system with specific interrupts. This allows other modules to access the IDMA buffers only under particular condition. The complete GO instruction flow is detailed in Figure 7, where the steps 207 to 211 designate other interrupts.

Normally, if all the data have been processed and all the output results have been produced, the process should end with interrupt 3, that is step 208.

The table reproduced hereinbelow details the meaning of the interrupts in question.

| | |
|---|---|
| | |

| INTERRUPT | MEANING |
|---|---|
| 1 (step 205) | Data processing has begun as there are enough data in the inbuffer 11 |
| 2 (step 207) | No data processing is executed as there are not enough data in the inbuffer 11 |
| 3 (step 208) | Data processing finished. The outbuffer 12 is full and the inbuffer 11 is empty, i.e. VBI=0 (step 212) |
| 4 (step 209) | Data processing finished. The outbuffer 12 is not full and the inbuffer 11 is empty. |
| 5 (steep 210) | Data processing finished. The outbuffer 12 is full and the inbuffer 12 is not empty. |

The "GO" instruction is downloaded into each IDMA from the CPU and enables the respective IDMA to perform a single IP process.

In order to ensure that the IDMAs are always active without CPU commands, each IDMA develops an extension of the "GO" instruction ("GOAL" instruction), that substantially corresponds to the flowchart of figure 7 with the additional provision of return paths leading from each of the (end) interrupts 207, 208, 209, 210, and 211 back to the input of the comparison step 202.

When the process is finished, the IDMA 10 always polls the VBI value to determine when a new process can start. Meanwhile the master in module 15 (or the coupled master out block 16 of another IDMA) can store data in the input buffer 11. Once the data are available a new RBF processing is activated.

The interrupt controller 20 is a very simple FIFO that receives interrupts from the MCU 14. Each interrupt arriving from the MCU 14 is stored in the FIFO.

When the FIFO is not empty, one of the interrupt signals is driven high to be recognized by an external device. The user can configure the association between the interrupt level and a particular interrupt pin.

When the external device receives the interrupt it can access through the bus the interrupt FIFO 20 to read which interrupt has been produced. When the interrupt FIFO is empty, no interrupt is asserted. It is possible to mask some interrupts. In this case the interrupt is not stored in the FIFO.

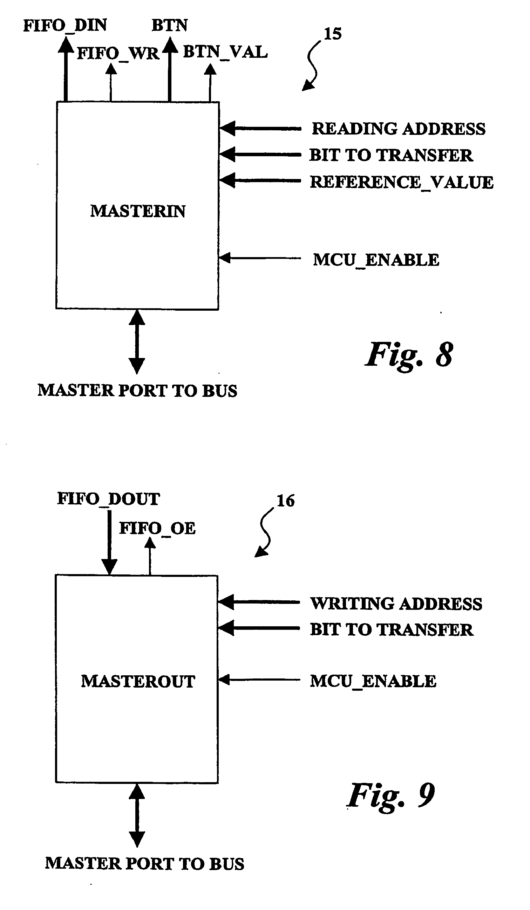

The basic layout of the masterin block or module 15 is shown in Figure 8. The programmable masterin block (along with the masterout block 16) is the core of the IDMA functionality. Its purpose is to upload data through the bus 17 and to download them in the input buffer 11. It is activated by the MCU 14 through an ENABLE signal.

As better explained in the following, the input buffer 11 is intended to be (virtually) coupled to the output buffer of another IDMA - not shown in Figure 4 - located "upstream" in the general layout of Figure 2.

This preferably occurs either via the respective masterin block 15 or via the masterout block 16 associated to the output buffer of the IDMA located "upstream".

When coupling is obtained via the respective masterin block 15, such mastering block 15 tries to fetch data from such coupled output buffer of another IDMA; this occurs only if the valid bit in the input buffer 11 is less than the value driven on the REFERENCE_VALUE port. This control improves bus occupation and system performance.

The fetch operation is structured in three parts.

At first, the masterin block 15 sends a request to the coupled output buffer of another IDMA to know if there are enough data to load. This request occurs through the bus 17 in one clock cycle. The total amount of data to be loaded is determined by the value on the BIT_TO_TRANSFER port.

Then, the output buffer of the other IDMA being questioned sends back an acknowledgement when the data are available. This operation occurs through the bus 17 in one clock cycle. Between the request and the acknowledgement the bus is kept totally free.

Finally, when the acknowledgement is asserted, the masterin block 15 proceeds to the transfer between the two IDMAs involved. The process of request/acknowledgement is a significant point in creating a virtual channel between two IDMAs.

Thanks to this feature, the control CPU does not have to control the IDMA behaviour and it can run other procedures.

The basic layout of the masterout block or module 16 is shown in Figure 9. The programmable master out block 16 (along with the master in block 15) is the core of the IDMA functionality. Its purpose is to upload data from the output buffer 12 and download them through the bus 17. It can access other components in the system only under particular condition. It is activated by the MCU 14 through an ENABLE signal.

As indicated previously coupling between the input buffer of an IDMA and the output buffer of another IDMA arranged "upstream" in the chain can also be achieved via the masterout block 16 associated with such output buffer.

In that case, the masterout block 16 in question, when enabled, tries to store data in the coupled input buffer of said another IDMA 10 only if the valid bits in the output buffer 12 are more than the value driven on the BIT_TO_TRANSFER port. This control improves bus occupation and system performances.

Again, the store operation is structured in three parts.

At first the master out block 16 sends a request to the coupled in buffer of the other IDMA to know if there are locations enough to store the data. This request occurs through the bus 17 in one clock cycle. The total amount of data to be stored is determined by the value on the BIT_TO_TRANSFER port.

Then, the input buffer of the other IDMA being questioned sends back an acknowledgement when the amount of memory locations requested is available. This operation occurs through the bus 17 in one clock cycle. Between the request and the acknowledgement the bus is totally free.

Finally, when the acknowledgement is asserted, the masterout block 16 proceeds to the transfer. The process of request/acknowledgement just described is a significant point in order to create a virtual channel between two IDMAs.

Thanks to this feature the control CPU does not have to control the IDMA behaviour and it can run other procedures.

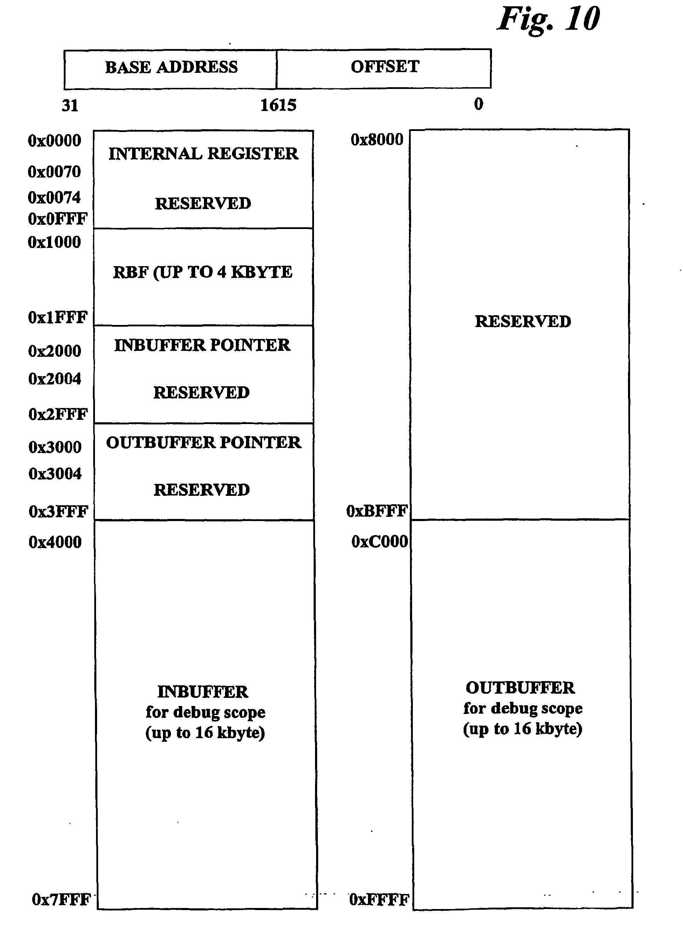

All the internal memory resources of the IDMA 10 (internal registers and buffers) are mapped in the memory starting from the IBA (Idma Base Address). The IBA is chosen at synthesis time and can be changed if necessary run time. The memory plan is preferably as shown in Figure 10.

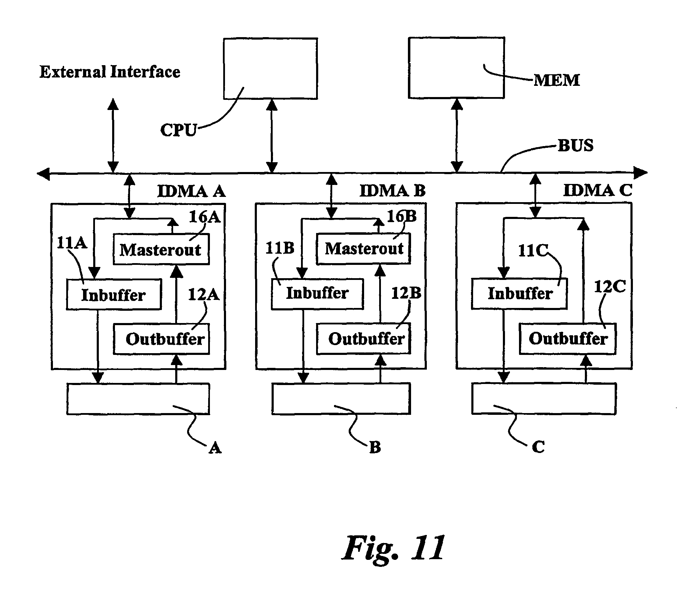

Figure 11 essentially details the basic scheme of Figure 2 by highlighting the presence of input buffers (11A, 11B, 11C), output buffers (12A, 12B, 12C) and masterout block (16A, 16B) in the IDMAs designated IDMA A, IDMA B, and IDMA C.

There, the IDMA A and IDMA B have respective masterout blocks 16A, 16B that couple the associated output buffers 12A, 12B with the input buffers 11B, 11C of IDMA B and IDMA C.

Specifically, the output buffer 12A is coupled via the masterout block 16A with the input buffer 11B and the output buffer 12B is coupled via the masterout block 16B with the input buffer 11C.

In such a chain arrangement each IDMA module has:
- a) its output buffer (12A, 12B) coupled to the input buffer (11B, 11C) of another IDMA module located "downstream" in the chain; and/or
- b) its input buffer (11B, 11C) coupled to the output buffer (12A, 12B) of another IDMA module located "upstream" in the chain.

Specifically, the IDMA A module fulfils only condition a); the IDMA B module fulfils both conditions a) and b); and the IDMA C module fulfils only condition b).

Operation of the transmission chain shown in Figure 11 is organized in several steps, and in fact only the three initial steps involve the CPU.

At configuration, after system start up, the CPU configures all the IDMAs. It downloads the RBF programs and all the default values for the internal registers as well as the writing address values for the output buffers are initialised to couple the master out block 16A with the input buffer 11B and the master out block 16B with the input buffer 11C.

To activate the IDMAs, a "GOAL" instruction (as described in the foregoing - see also Figure 7) is transmitted to every IDMA.

The CPU transfers the data to be processed into the input buffer 11A. The RBF 13 in IDMA A begins to transfer data to IP A and writes output data from the IP A in the output buffer 12A.

As soon as the output buffer 12A is filled with data, the masterout block 16A transfers the data to the input buffer 11B: this occurs after performing the request/acknowledgement procedure described in the foregoing with the input buffer 11B.

As soon as the input buffer 11B is filled with data, the RBF 13 in IDMA B transfer the data to IP B and writes data from IP B in the output buffer 12B.

As soon as the output buffer 12B is filled with data the master out block 16B transfers the data to the input buffer 11C. Again, this occurs after a request/acknowledgement procedure with the input buffer 11C.

As soon as the input buffer 11C is filled with data, the RBF 13 in IDMA C transfer the data to IP C and writes data from IP C in output buffer 12C.

An interrupt is sent to the CPU to indicate that valid data are available in the output buffer 12C.

The system loops through the steps exemplified in the foregoing until all the data are processed.

It is evident that this is just a possible implementation of an IDMA based architecture, which in fact may include any number of IDMAs. Several possible variants can be easily conceived, such as for instance adding a masterin block to IDMA A and/or a master out block to IDMA C.

Of course, without prejudice to the underlying principle of the invention, the details and embodiments may vary, even significantly, with respect to what has been described by way of example only without departing from the scope of the invention as defined by the annexed claims.

## Claims

1. A method of exchanging data within a direct memory access (DMA) arrangement including a plurality of IP blocks (A, B, C), **characterised in that** it includes the steps of:
- associating with said IP blocks (A, B, C) respective DMA modules (IDMA A, IDMA B, IDMA C), each of said DMA modules including an input buffer (11A, 11B, 12C) and an output buffer (12A, 12B, 12C);
- coupling said respective DMA modules (IDMA A, IDMA B, IDMA C) over a data transfer facility (BUS) in a chain arrangement wherein each said DMA module, other than the last in the chain, has at least one of its output buffer (12A, 12B) coupled to the input buffer (11B, 11C) of another said DMA modules downstream in the chain and each said DMA modules, other than the first in the chain, has its input buffer (11B, 11C) coupled to the output buffer (12A, 12B) of another of said DMA modules upstream in the chain;
- causing each of said DMA modules (IDMA A, IDMA B, IDMA C) to interact with the respective IP block (A, B, C) by writing data from the input buffer (11A, 11B, 11C) of the DMA module into the respective IP block (A, B, C) and reading data from the respective IP block (A, B, C) into the output buffer (12A, 12B, 12C) of the DMA module; and
- operating said input (11A, 11B, 11C) and output (12A, 12B, 12C) buffers in such a way that:
- said writing of data from the input buffer (11A, 11B, 11C) of the DMA module into the respective IP block (A, B, C) is started when said input buffer (11A, 11B, 11C) is at least partly filled with data;
- when said reading of data from the respective IP block (A, B, C) into the output buffer of the DMA module is completed, the data in the output buffer of the DMA module are transferred to the input buffer (11B, 11C) of the DMA module downstream in the chain or, in the case of the last DMA module in the chain, are provided as output data.

2. The method of claim 1, **characterised in that** it includes the steps of:
- associating to said output buffers (12A, 12B) and input buffers (11B, 11C) coupled in the chain at least one intermediate block (16A, 16B) to control data transfer between said coupled buffers;
- controlling transfer of data between said coupled buffers over said data transfer facility by:
- issuing at least one request of a requesting buffer for a buffer coupled therewith to indicate at least one transfer condition selected out of the group consisting of: data existing to be transferred and enough space existing for receiving said data when transferred;
- issuing at least one corresponding acknowledgement towards said requesting buffer confirming that the said at least one transfer condition is met; and
- transferring data between said requesting buffer and said coupled buffer, whereby said data transfer facility (BUS) is left free between said at least one request and said at least one acknowledgement.

3. The method of either of claims 1 or 2, **characterised in that** it comprises the steps of:
- including a CPU in said arrangement; and
- using said CPU for transferring data to be processed into the input buffer (11A) of the first DMA module (IDMA A) in said chain; and
- using said CPU for collecting said output data from the output buffer (12C) of the last DMA module (IDMA C) in said chain.

4. The method of claim 3, **characterised in that** it includes the step of configuring said DMA modules (IDMA A, IDMA B, IDMA C) via said CPU.

5. System for exchanging data between a plurality of IP blocks, **characterised in that** it includes:
- a data transfer facility (BUS) ;
- a plurality of DMA modules (IDMA A, IDMA B, IDMA C) associated with said IP blocks, the DMA modules being coupled over said data transfer facility (BUS), each DMA module including:
- an input buffer (11) arranged for writing data into a respective IP block (A, B, C) and exchanging data with said data transfer facility (BUS), and
- an output buffer (12) arranged for reading data from said respective IP block (A, B, C) and exchanging data with said data transfers facility (BUS);
wherein said DMA modules are arranged in a chain so that each said DMA module, other than the last in the chain, has at least one of its output buffer (12A, 12B) coupled to the input buffer (11B, 11C) of another said DMA modules downstream in the chain and each said DMA modules, other than the first in the chain, has its input buffer (11B, 11C) coupled to the output buffer (12A, 12B) of another of said DMA modules upstream in the chain, the system comprising
- means for starting writing of data from the input buffer (11A, 11B, 11C) of the DMA module into the respective IP block (A, B, C) when said input buffer (11A, 11B, 11C) is at least partly filled with data; and
- means for transferring data from the output buffer of the DMA module to the input buffer (11B, 11C) of the DMA module downstream in the chain when reading of data from the respective IP block (A, B, C) into the output buffer of the DMA module is completed, or, in the case of the last DMA module in the chain, for providing the data in the output buffer of the DMA module as output data.

6. The system of claim 5, **characterised in that** at least one of said input (11) and output (12) buffers has a fixed data width with respect to said data transfers facility (BUS) and a selectively variable data width with respect to said respective IP block (A, B, C).

7. The system of either of claims 5 or 6, **characterised in that** it includes a slave interface module (18) configured for reading from outside the architecture data relating to at least one parameter selected from the group consisting of:
- how many bits are available for reading in said input buffer (11),
- how many bits are present in said input buffer (11),
- how many bits are available for reading in said output buffer (12), and
- how many bits are present in said output buffer (12).

8. The system of any of claims 5 to 7, **characterised in that** it includes a reprogrammable finite state machine (13) arranged for driving operation of said architecture by taking data from said input buffer (11), downloading data into said respective IP block (A, B, C), receiving data from said respective IP block (A, B, C), and storing data in said output buffer (12).

9. The system of any of claims 5 to 8, **characterised in that** to at least one of said input buffer (11) and output buffer (12) there is associated a respective master block (15, 16) for exchanging data between the associated buffer (11, 12) and said data transfer facility (BUS), said master block (15, 16) being adapted to be coupled in a data exchange relationship to a buffer in a homologous direct memory access module (IDMA) in an arrangement wherein said master block (15, 16) and said buffer coupled thereto are configured for:
- issuing at least one request of a requesting buffer for a buffer coupled therewith to indicate at least one transfer condition selected out of the group consisting of: data existing to be transferred and enough space existing for receiving said data when transferred;
- issuing at least one corresponding acknowledgement towards said requesting buffer confirming that the said at least one transfer condition is met; and
- transferring data between said requesting buffer and said coupled buffer, whereby said data transfer facility (BUS) is left free between said at least one request and said at least one acknowledgement.

10. A computer program product directly loadable into the memory of a digital computer, comprising software code portions for performing the method of any of claims 1 to 4 when said product is run on a computer.

## Patentansprüche

1. Ein Verfahren zum Austauschen von Daten innerhalb einer Anordnung mit Direktspeicherzugriff (DMA) umfassend eine Vielzahl IP-Blöcken (A, B, C), **dadurch gekennzeichnet, dass** folgende Schritte umfasst sind:
- Verknüpfen entsprechender DMA-Module (IDMA A, IDMA B, IDMA C) mit IP-Blöcken (A, B, C), jedes der DMA-Module umfasst einen Eingangspuffer (11A, 11B, 11C) und einen Ausgangspuffer (12A, 12B, 12C);
- Koppeln der entsprechenden DMA-Module (IDMA A, IDMA B, IDMA C) über eine Datentransfereinheit (BUS) in eine verketteten Anordnung, wobei jedes der DMA-Module mit Ausnahme des Letzten in der Kette hat zumindest eines seiner Ausgangspuffer (12A, 12B) mit dem Eingangspuffer (11B, 11C) eines anderen DMA-Moduls stromabwärts in der Kette gekoppelt, und jedes der DMA-Module mit Ausnahme des ersten in der Kette hat den Eingangspuffer (11B, 11C) mit dem Ausgangspuffer (12A, 12B) eines Anderen der DMA-Module stromaufwärts in der Kette gekoppelt;
- Veranlassen jedes der DMA-Module (IDMA A, IDMA B, IDMA C) zum Wechselwirken mit dem entsprechenden IP-Block (A, B, C) durch Schreiben von Daten aus dem Eingangspuffer (11A, 11B, 11C) des DMA-Moduls in den entsprechenden IP-Block (A, B, C) und Lesen von Daten aus dem entsprechenden IP-Block (A, B, C) in den Ausgangspuffer (12A, 12B, 12C) des DMA-Moduls; und
- Betreiben des Eingangspuffers (11A, 11B, 11C) und des Ausgangspuffers (12A, 12B, 12C) derart, dass:
- das Schreiben von Daten aus dem Eingangspuffer (11A, 11B, 11C) des DMA-Moduls in dem entsprechenden IP-Block (A, B, C) beginnt, wenn der Eingangspuffer (11A, 11B, 11C) zumindest teilweise mit Daten gefüllt ist;
- die Daten in dem Ausgangspuffer des DMA-Moduls an den Eingangspuffer (11B, 11C) des DMA-Moduls stromabwärts in der Kette übertragen werden, sofern das Lesen von Daten aus dem entsprechenden IP-Block (A, B, C) in den Ausgangspuffer des DMA-Moduls abgeschlossen ist, oder die Daten im Fall des letzten DMA-Moduls in der Kette als Ausgangsdaten bereitgestellt werden.

2. Verfahren nach Anspruch 1, **dadurch gekennzeichnet, dass** es weiter die Schritte umfasst:
- Verknüpfen von zumindest einem Zwischenblock (16A, 16B) mit den Ausgangspuffern (12A, 12B) und den Eingangspuffern (11B, 11C), die in der Kette gekoppelt sind, um den Datentransfer zwischen den gekoppelten Puffern zu steuern;
- Steuern des Datentransfers zwischen den gekoppelten Puffern über die Datentransfereinheit indem:
- zumindest eine Anfrage eines anfragenden Puffers für einen Puffer, der damit gekoppelt ist, ausgegeben wird, um zumindest eine Transferbedingung anzuzeigen, die aus der folgenden Gruppe gewählt ist: es existieren Daten, die zu transferieren sind, und es ist genügend Speicher zum Empfangen der Daten vorhanden;
- zumindest eine entsprechende Bestätigung an den anfragenden Puffer ausgegeben wird, um das Vorliegen der zumindest einen Transferbedingung zu bestätigen; und
- Daten zwischen dem anfragenden Puffer und dem gekoppelten Puffer übertragen werden, wobei die Datentransfereinheit (BUS) zwischen der zumindest einen Anfrage und der zumindest einen Bestätigung freigehalten wird.

3. Verfahren nach einem der Ansprüche 1 oder 2, **dadurch gekennzeichnet, dass** es weiter die Schritte umfasst:
- Einbeziehen einer CPU in der Anordnung; und
- Nutzen der CPU zum Transferieren von Daten, die in dem Eingangspuffer (11A) des ersten DMA-Moduls (IDMA A) in der Kette verarbeitet werden; und
- Nutzen der CPU zum Erfassen der Ausgangsdaten von dem Ausgangspuffer (12C) von dem letzten DMA-Modul (IDMA C) in der Kette.

4. Verfahren nach Anspruch 3, **dadurch gekennzeichnet, dass** es weiter den Schritt des Konfigurierens der DMA-Module (IDMA A, IDMA B, IDMA C) über die CPU umfasst.

5. System zum Austausch von Daten zwischen einer Vielzahl von IP-Blöcken, **dadurch gekennzeichnet, dass** Folgendes umfasst ist:
- eine Datentransfereinheit (BUS);
- eine Vielzahl von DMA-Modulen (IDMA A, IDMA B, IDMA C), die mit IP-Blöcken assoziiert sind, die DMA-Module sind über die Datentransfereinheit (BUS) miteinander gekoppelt, jedes DMA-Modul umfasst:
- einen Eingangspuffer (11), der ausgebildet ist, um von Daten in den entsprechenden IP-Block (A, B, C) zu schreiben und um Daten mit der Datentransfereinheit (BUS) auszutauschen, und
- einen Ausgangspuffer (12), der ausgebildet ist, um Daten aus dem entsprechenden IP-Block (A, B, C) zu lesen und Daten mit der Datentransfereinheit (BUS) auszutauschen;
wobei die DMA-Module in einer Kette derart angeordnet sind, dass jedes der DMA-Module mit Ausnahme des letzten in der Kette zumindest einen seiner Ausgangspuffer (12A, 12B) an einen Eingangspuffer (11B, 11C) eines anderen DMA-Moduls stromabwärts in der Kette gekoppelt hat, und jedes der DMA-Module mit Ausnahme des ersten in der Kette seinen Eingangspuffer (11B, 11C) an den Ausgangspuffer (12A, 12B) eines anderen der DMA-Module stromaufwärts in der Kette gekoppelt hat, wobei das System Folgendes umfasst:
- Mittel zum Beginnen des Schreibens von Daten aus dem Eingangspuffer (11A, 11B, 11C) des DMA Moduls in den entsprechenden IP-Block (A, B, C), wenn der Eingangspuffer (11A, 11B, 11C) zumindest teilweise mit Daten gefüllt ist; und
- Mittel zum Übertragen von Daten aus dem Ausgangspuffer des DMA-Moduls an den Eingangspuffer (11B, 11C) des DMA-Moduls stromabwärts in der Kette, wenn das Lesen der Daten von dem entsprechenden IP-Block (A, B, C) in den Ausgangspuffer des DMA-Moduls beendet ist, oder, im Falle des letzten DMA-Moduls in der Kette, zum Bereitstellen der Daten in dem Ausgangspuffer des DMA-Moduls als Ausgangsdaten.

6. Das System nach Anspruch 5, **dadurch gekennzeichnet, dass** zumindest eines der Eingangs- (11) und Ausgangs- (12) Puffer eine feste Datenbreite im Bezug auf die Datentransfereinheit (BUS) aufweist und eine selektive Datenbreite in Bezug auf den entsprechenden IP-Block (A, B, C) aufweist.

7. System nach einem der Ansprüche 5 oder 6, **dadurch gekennzeichnet, dass** es ein Nebenschnittstellenmodul (18) umfasst, das konfiguriert ist zum Lesen von Architekturdaten von außen, die zu zumindest einem Parameter aus der folgenden Gruppe in Bezug stehen:
- wie viele Bits zum Lesen in dem Eingangspuffer (11) zur Verfügung stehen,
- wie viele Bits in dem Eingangspuffer (11) vorhanden sind,
- wie viele Bits zum Lesen in dem Ausgangspuffer (12) zur Verfügung stehen, und
- wie viele Bits in dem Ausgangspuffer (12) vorhanden sind.

8. System nach einem der Ansprüche 5 bis 7, **dadurch gekennzeichnet, dass** eine programmierbare finite Zustandsmaschine (13) aufweist, die zum Betreiben der Architektur durch Nehmen von Daten aus dem Eingangspuffer (11), Herunterladen von Daten in den entsprechenden IP-Block (A, B, C), Erhalten von Daten aus dem entsprechenden IP-Block (A, B, C), und Abspeichern von Daten in dem Ausgangspuffer (12) zu betreiben ausgebildet ist.

9. System nach einem der Ansprüche 5 bis 8, **dadurch gekennzeichnet, dass** zu zumindest einem der Eingangspuffer (11) und der Ausgangspuffer (12) ein entsprechender Masterblock (15, 16) ausgebildet ist, um Daten zwischen dem verknüpften Puffer (11, 12) und der Datentransfereinheit (BUS) auszutauschen, wobei der Masterblock (15, 16) ausgebildet ist, um in einer Datenaustauschbeziehung an einen Puffer in einem homologen Direktspeicherzugriffsmodul (IDMA) in einer Anordnung gekoppelt zu sein, wobei der Masterblock (15, 16) und der dazu koppelnde Puffer konfiguriert sind, um:
- zumindest eine Anfrage eines anfragenden Puffers für einen Puffer, der damit gekoppelt auszugeben, um zumindest eine Datentransferbedingung anzuzeigen, die aus der folgenden Gruppe gewählt wird: es existieren zu transferierende Daten und genügend Speicher zum Erhalt der zu transferierenden Daten ist vorhanden;
- Ausgeben von zumindest einer entsprechenden Bestätigung an den anfragenden Puffer, die bestätigt, dass die zumindest eine Transferbedingung erfüllt ist; und
- Übertragen von Daten zwischen dem anfragenden Puffer und dem gekoppelten Puffer, wobei die Datentransfereinheit (BUS) zwischen der zumindest einen Anfrage und der zumindest einen Bestätigung freigehalten wird.

10. Computerprogrammprodukt, das direkt in den Speicher eines digitalen Computers ladbar ist, umfassend Softwarecodeanteile zum Ausführen des Verfahrens nach einem der Ansprüche 1 bis 4, wenn das Produkt in einem Computer läuft.

## Revendications

1. Procédé d'échange de données à l'intérieur d'un agencement d'accès direct à la mémoire (DMA) comprenant une pluralité de blocs IP (A, B, C), **caractérisé en ce qu'**il comprend les étapes consistant à :
- associer auxdits blocs IP (A, B, C) des modules DMA respectifs (IDMA A, IDMA B, IDMA C), chacun desdits modules DMA comprenant une mémoire tampon d'entrée (11A, 11B, 11C) et une mémoire tampon de sortie (12A, 12B, 12C) ;
- coupler lesdits modules DMA respectifs (IDMA A, IDMA B, IDMA C) par l'intermédiaire d'une installation de transfert de données (BUS) dans un agencement en chaîne dans lequel chaque dit module DMA, autre que le dernier dans la chaîne, a au moins sa mémoire tampon de sortie (12A, 12B) couplée à la mémoire tampon d'entrée (11B, 11C) d'un autre desdits modules DMA en aval dans la chaîne et chaque dit module DMA, autre que le premier dans la chaîne, a sa mémoire tampon d'entrée (11B, 11C) couplée à la mémoire tampon de sortie (12A, 12B) d'un autre desdits modules DMA en amont dans la chaîne ;
- faire en sorte que chacun desdits modules DMA (IDMA A, IDMA B, IDMA C) ait une interaction avec le bloc IP respectif (A, B, C) en écrivant des données à partir de la mémoire tampon d'entrée (11A, 11B, 11C) du module DMA dans le bloc IP respectif (A, B, C) et en lisant des données à partir du bloc IP respectif (A, B, C) dans la mémoire tampon de sortie (12A, 12B, 12C) du module DMA ; et
- faire fonctionner lesdites mémoires tampons d'entrée (11A, 11B, 11C) et de sortie (12A, 12B, 12C) de manière telle que :
- ladite écriture de données à partir de la mémoire tampon d'entrée (11A, 11B, 11C) du module DMA dans le bloc IP respectif (A, B, C) soit commencée lorsque ladite mémoire tampon d'entrée (11A, 11B, 11C) est au moins partiellement remplie avec des données ;
- lorsque ladite lecture de données à partir du bloc IP respectif (A, B, C) dans la mémoire tampon de sortie du module DMA est achevée, les données dans la mémoire tampon de sortie du module DMA soient transférées à la mémoire tampon d'entrée (11B, 11C) du module DMA en aval dans la chaîne ou, dans le cas du dernier module DMA dans la chaîne, soient fournies en tant que données de sortie.

2. Procédé selon la revendication 1, **caractérisé en ce qu'**il comprend les étapes consistant à :
- associer auxdites mémoires tampons de sortie (12A, 12B) et mémoires tampons d'entrée (11B, 11C) couplées dans la chaîne au moins un bloc intermédiaire (16A, 16B) pour commander le transfert de données entre lesdites mémoires tampons couplées ;
- commander le transfert de données entre lesdites mémoires tampons couplées par l'intermédiaire de ladite installation de transfert de données en :
- émettant au moins une requête d'une mémoire tampon interrogatrice pour qu'une mémoire tampon couplée avec celle-ci indique au moins une condition de transfert sélectionnée parmi le groupe constitué de : données existant pour être transférées et espace suffisant existant pour recevoir lesdites données lorsqu'elles sont transférées ;
- émettant au moins un accusé de réception correspondant vers ladite mémoire tampon interrogatrice confirmant que ladite au moins une condition de transfert est satisfaite ; et
- transférant des données entre ladite mémoire tampon interrogatrice et ladite mémoire tampon couplée, moyennant quoi ladite installation de transfert de données (BUS) est laissée libre entre ladite au moins une requête et ledit au moins un accusé de réception.

3. Procédé selon une quelconque des revendications 1 ou 2, **caractérisé en ce qu'**il comprend les étapes consistant à :
- inclure une CPU dans ledit agencement ; et
- utiliser ladite CPU pour transférer des données destinées à être traitées dans la mémoire tampon d'entrée (11A) du premier module DMA (IDMA A) dans ladite chaîne ; et
- utiliser ladite CPU pour collecter lesdites données de sortie à partir de la mémoire tampon de sortie (12C) du dernier module DMA (IDMA C) dans ladite chaîne.

4. Procédé selon la revendication 3, **caractérisé en ce qu'**il comprend l'étape consistant à configurer lesdits modules DMA (IDMA A, IDMA B, IDMA C) par l'intermédiaire de ladite CPU.

5. Système pour échanger des données entre une pluralité de blocs IP, **caractérisé en ce qu'**il comprend :
- une installation de transfert de données (BUS) ;
- une pluralité de modules DMA (IDMA A, IDMA B, IDMA C) associés avec lesdits blocs IP, les modules DMA étant couplés par l'intermédiaire de ladite installation de transfert de données (BUS), chaque module DMA comprenant :
-- une mémoire tampon d'entrée (11) agencée pour écrire des données dans un bloc IP respectif (A, B, C) et échanger des données avec ladite installation de transfert de données (BUS), et
-- une mémoire tampon de sortie (12) agencée pour lire des données à partir dudit bloc IP respectif (A, B, C) et échanger des données avec ladite installation de transfert de données (BUS) ;
dans lequel lesdits modules DMA sont agencés dans une chaîne pour que chaque dit module DMA, autre que le dernier dans la chaîne, ait au moins sa mémoire tampon de sortie (12A, 12B) couplée à la mémoire tampon d'entrée (11B, 11C) d'un autre desdits modules DMA en aval dans la chaîne et chaque dit module DMA, autre que le premier dans la chaîne, ait sa mémoire tampon d'entrée (11B, 11C) couplée à la mémoire tampon de sortie (12A, 12B) d'un autre desdits modules DMA en amont dans la chaîne, le système comprenant :
- des moyens destinés à commencer l'écriture de données à partir de la mémoire tampon d'entrée (11A, 11B, 11C) du module DMA dans le bloc IP respectif (A, B, C) lorsque ladite mémoire tampon d'entrée (11A, 11B, 11C) est au moins partiellement remplie avec des données ; et
- des moyens destinés à transférer des données de la mémoire tampon de sortie du module DMA à la mémoire tampon d'entrée (11B, 11C) du module DMA en aval dans la chaîne lorsque la lecture de données à partir du bloc IP respectif (A, B, C) dans la mémoire tampon de sortie du module DMA est achevée, ou, dans le cas du dernier module DMA dans la chaîne, à fournir les données dans la mémoire tampon de sortie du module DMA en tant que données de sortie.

6. Système selon la revendication 5, **caractérisé en ce qu'**au moins une desdites mémoires tampons d'entrée (11) et de sortie (12) a une largeur de données fixe par rapport à ladite installation de transfert de données (BUS) et une largeur de données sélectivement variable par rapport audit bloc IP respectif (A, B, C).

7. Système selon une quelconque, des revendications 5 ou 6, **caractérisé en ce qu'**il comprend un module d'interface esclave (18) configuré pour lire à partir de l'extérieur de l'architecture des données concernant au moins un paramètre sélectionné parmi le groupe constitué de :
- le nombre de bits qui sont disponibles pour la lecture dans ladite mémoire tampon d'entrée (11),
- le nombre de bits qui sont présents dans ladite mémoire tampon d'entrée (11),
- le nombre de bits qui sont disponibles pour la lecture dans ladite mémoire tampon de sortie (12), et
- le nombre de bits qui sont présents dans ladite mémoire tampon de sortie (12).

8. Système selon une quelconque des revendications 5 à 7, **caractérisé en ce qu'**il comprend une machine à états, finis reprogrammable (13) agencée pour entraîner le fonctionnement de ladite architecture en prenant des données à partir de ladite mémoire tampon d'entrée (11), téléchargeant des données dans ledit bloc IP respectif (A, B, C), recevant des données à partir dudit bloc IP respectif (A, B, C), et stockant des données dans ladite mémoire tampon de sortie (12).

9. Système selon une quelconque des revendications 5 à 8, **caractérisé en ce qu'**à au moins une desdites mémoire tampon d'entrée (11) et mémoire tampon de sortie (12) est associé un bloc maître respectif (15, 16) pour échanger des données entre la mémoire tampon associée (11, 12) et ladite installation de transfert de données (BUS), ledit bloc maître (15, 16) étant adapté pour être couplé dans une relation d'échange de données à une mémoire tampon dans un module homologue d'accès direct à la mémoire (IDMA) dans un agencement dans lequel ledit bloc maître (15, 16) et ladite mémoire tampon couplée à celui-ci sont configurés pour :
- émettre au moins une requête d'une mémoire tampon interrogatrice pour qu'une mémoire tampon couplée avec celle-ci indique au moins une condition de transfert sélectionnée parmi le groupe constitué de : données existant pour être transférées et espace suffisant existant pour recevoir lesdites données lorsqu'elles sont transférées ;
- émettre au moins un accusé de réception correspondant vers ladite mémoire tampon interrogatrice confirmant que ladite au moins une condition de transfert est satisfaite ; et
- transférer les données entre ledit tampon demandeur et ledit tampon couplé, ledit moyen de transfert de données (BUS) restant libre entre ladite au moins une demande et ledit au moins un accusé de réception.

10. Produit programme informatique pouvant être chargé directement dans la mémoire d'un ordinateur numérique et comprenant des parties de code de logiciel permettant d'exécuter le procédé selon l'une quelconque des revendications 1 à 4 lorsque ledit produit est exécuté sur un ordinateur.
